# EUROPEAN PATENT SPECIFICATION

(11) **EP 1 995 882 B1**
(45) Date of publication and mention of the grant of the patent: **25.09.2013**
(21) Application number: 07301052.2
(22) Date of filing: 21.05.2007
(51) Int. Cl.: H04B 1/18, H04B 1/46

(54) **Method for controlling a remote unit and remote unit**
Verfahren zur Steuerung einer Ferneinheit sowie Ferneinheit
Procédé de contrôle d'une unité à distance et unité à distance

(43) Date of publication of application: 26.11.2008
(73) Proprietor: Alcatel Lucent, 75007 Paris (FR)
(72) Inventor: Neustadt, Alf, 70180 Stuttgart (DE); Endress, Friedrich, 71272 Renningen (DE)
(74) Representative: Wetzel, Emmanuelle

(56) References cited:
- US-A1- 2003 134 601

## Description

### BACKGROUND OF THE INVENTION

The invention relates to a method for controlling a remote unit over a signal line. The remote unit is switchable in between a transmit mode and a receive mode. The remote unit in transmit mode is used for transmission of useful information which is input to the remote unit over the signal line. The remote unit in receive mode is used for reception of useful information. The received useful information is output by the remote unit over the signal line. The invention also relates to a remote unit controllable by said method and to a controlling unit for controlling the remote unit.

The invention relates to a remote unit (RU) which is switchable between a transmit mode and a receive mode. Such a remote unit is for example a remote unit comprising a low noise amplifier (LNA) and optionally a power amplifier (PA). Such a remote unit is for example used in time division duplex (TDD) systems where it is necessary to switch between transmission and reception on the same frequency. The control of the remote unit is performed by a controlling unit (CU). The controlling unit is for example a base station of a cellular telecommunication system. In cellular time division duplex systems the switching points of the remote unit must be coordinated, and must be the same within a radio coverage area.

The remote unit is for example a transmit amplifier and/or a receive amplifier located between the base station and an antenna module. This remote unit in between the base station and the antenna module must be controlled to be either in transmit mode or in receive mode. In a cellular radio communication system the radio frequency (RF) level difference between receive and transmit mode is approximately the same as the maximum path loss to the mobile equipment. This is around 160 dB for a WiMAX (Worldwide Interoperability for Microwave Access) system, for example. This means that the transmit level must be lowered by 160 dB in the receive mode. This can for example be achieved by switching off large parts of the transmitter (TX) and the transmitter amplifier when in receive mode.

At the beginning of a transmission, when transmit mode begins, the transmission signal rises during a rise time. The rise time of the transmit signal is limited by the bandwidth of the radio channel, e. g. for a 10 MHz radio channel, the rise time is approximately 100 ns. Switching on an optional transmitter amplifier, e. g. a power amplifier, also takes some time, as the transmitter amplifier has a certain power-on time. The time for switching on a power amplifier for example can be much longer than the signal rise time. It is therefore advantageous to switch on the transmit chain comprising modules with a certain power-on time before the transmit signal rises.

The transmit signal level can be several Watts or even several ten Watts. The receiver low noise amplifier can usually withstand several mW and higher power levels will lead to damages. The receiver low noise amplifier therefore has a RF switch, which disconnects the low noise amplifier from the antenna module during transmit time.

In current products a control signal enables the transmit mode sufficiently before the transmit signal begins. This control signal is carried over a separate cable from the controlling module, e. g. the base station, to the remote unit. The RF switch of the receiver low noise amplifier also has to be controlled when switching to transmit mode. Usually the same control signal is used for switching on the transmitter amplifier and for switching off the receiver amplifier over the RF switch. It is important that the control signal has the right phase. It is important not to reverse receive and transmit direction and not to permanently signal "receive mode" to the remote unit.

Using a separate control signal over a separate cable, the aforementioned reliability is not easy to implement. The control signal over the separate control cable can easily be cabled inverse or a wire can break or a wire goes to ground etc. In a multi sector base station, which comprises several radio modules, e.g. one per sector, and where several such amplifier remote units are used, e.g. one per sector, there either has to be a separate control cable for each sector, which triples the effort for a three sector base station, or a central control point in the base station is needed.

In US 2003/134601 A1 a transceiver transmits RF signals at a low intermediate frequency (IF) along with control words, and a DC power supply over an extension IF cable connecting an active antenna element. The control words control switches in the antenna module that connect transmit and receive circuitry to the antenna and IF cable input at specific transmit/receive time periods as specified by a communication protocol.

Another possibility to power up the transmit amplifier is to use the RF signal itself. The transmit amplifier needs some time to power up. This means that a port of the transmit burst is lost and the rising edge can be damaged.

Another possibility is to rely on the fact that the transmit signal is based on a constant framing. In this case, the transmit amplifier can try to learn the frame in frequency and transmit start time and then enables the transmitter amplifier shortly before the learned transmit start time. Such a system is quiet complex and makes assumptions about the transmit signal which can be wrong, if the system change the timing or changes the mode. Such a system would be erroneous for example for a system with a repeater mode, where it can switch between transmit and receive mode several times in a frame.

### OBJECT OF THE INVENTION

An object of the invention is to provide a method for controlling a remote unit which is switchable in between a transmit mode and a receive mode. A further object of the invention is to provide a corresponding remote unit controllable by said method.

### SUMMARY OF THE INVENTION

These objects and other objects are solved by the features of the independent claims. Features of preferred embodiments of the invention are found in the dependent claims.

One main idea of the invention is to use an activation signal to switch the remote unit into transmit mode, before the transmission of useful information starts. This allows to avoid a separate control cable for switching the remote unit from transmit mode to receive mode and vice versa. Avoiding the cable means also avoiding all mechanical and failure problems associated with a separate control cable.

The activation signal preferably reaches a final power level which is defined with respect to the main transmit power level. The activation signal and is sent a certain time in advance of the transmission of the useful information. The certain time is long enough to have the transmitter amplifier powered up and stabilized. The activation signal is sent over a signal line to the remote unit. The same signal line is used for transmission of the useful information to the remote unit.

According to an embodiment of the invention the activation signal is chosen and applied in a way not to disturb the main communication. The main communication is the communication of useful information. The main communication is for example performed in between a base station and a mobile equipment served by the base station. The activation signal can be chosen and applied in a way not to disturb the main communication, for example if the activation signal is transmitted over the signal line and is not a part of the transmit frame, i. e. the useful information. Possible activation signals are for example noise, e. g. pseudo random noise, a multi-tone signal, when using only some carriers of e. g. an OFDM-signal, or a sine wave at the centre frequency of the bandwidth of the radio channel. A small bandwidth around the centre frequency of the radio channel is not used for the transmission of the useful information in some radio systems. For those systems for example, the sine wave at the centre frequency of the bandwidth of the radio channel can be chosen to falls within said "unused" bandwidth and to act as the activation signal.

The remote unit measures the power level of the signal received over the signal line and if a power threshold level is reached, the remote unit switches to transmit mode. The threshold can be chosen to an absolute value. The absolute value can for example be based on the relative level of the activation signal to the absolute transmit power, possible cable losses and/or hardware tolerances. A threshold can also be defined relative to the transmit power. This definition relative to the transmit power is especially advantageous if the remote unit monitors and remembers this transmit power. According to a preferred embodiment of the invention the threshold is a fixed value and not configurable to avoid possible mistakes or inconsistencies. According to an another embodiment of the invention the threshold can be configurable to be adaptable to changing conditions.

According to another advantageous embodiment of the invention, a voltage standing wave ratio measurement can be performed for the connection over the signal line up to the remote unit, with the remote unit being in transmit mode and the controlling unit being configured to have its receiver (RX) receiving the reflected signal.

According to a further preferred embodiment of the invention the absence of the activation signal is detected at the remote unit after the transmission of the useful information and the remote unit is switched to receive mode. Preferably, switching the remote unit to receive mode comprises connecting the low noise amplifier to the antenna module and de-activating an optional power amplifier.

According to a preferred embodiment of the invention the remote unit comprises a low noise amplifier. The low noises amplifier is connectable to an antenna module. Preferably, the antenna module is outside of the remote unit. Switching the remote unit to transmit mode comprises disconnecting the low noise amplifier from the antenna module.

According to a further preferred embodiment of the invention the remote unit comprises a power amplifier. The power amplifier is connected to an antenna module. Preferably, the antenna module is outside of the remote unit. Switching the remote unit to transmit mode comprises activating the power amplifier.

An inventive remote unit comprises a port over which the remote unit is connectable to a signal line. The remote unit is switchable in between a transmit mode and a receive mode. In transmit mode the remote unit is adapted to transmit useful information which is input to the remote unit over the signal line. In receive mode the remote unit is able to receive useful information which is output by the remote unit over the signal line. The remote unit comprises means to detect the presence or absence of an activation signal on the signal line and means to switch the remote unit inbetween the transmit and the receive mode.

According to a preferred embodiment of the invention the remote unit comprises a low noise amplifier. The low noise amplifier is connectable to an antenna module. The antenna module is preferably outside of the remote unit. If the remote unit is in transmit mode the low noise amplifier is disconnected from the antenna module. If the remote unit is in receive mode the low noise amplifier is connected to the antenna module.

According to a preferred embodiment of the invention the remote unit comprises power amplifier. The power amplifier is connected to an antenna module. The antenna module is preferably outside of the remote unit. If the remote unit is in transmit mode the power amplifier is activated. If the remote unit is in receive mode the power amplifier is de-activated.

According to a further preferred embodiment of the invention a method for measuring the voltage standing wave ratio (VSWR) on the signal line is provided. This method enables the measurement of the voltage standing wave ratio behind the low noise amplifier in the receive mode of the remote unit. For this measurement a signal is sent over the signal line to the remote unit with a power which is below the switch-over threshold of the remote unit. This means that the remote unit rests in receive mode. The signal power is low enough to avoid damages to the low noise amplifier. The reflected signal is received over the antenna module and amplified by the low noise amplifier in the remote unit. The signal can then be measured on the other end of the signal line by a controlling unit, e. g. by the base station.

### BRIEF DESCRIPTION OF THE DRAWINGS

Other characteristics and advantages of the invention will become apparent in the following detailed description of preferred embodiments of the invention illustrated by the accompanying drawings given by way of non limiting illustrations. The same reference numerals may be used in different figures of the drawings to identify the same or similar elements.
Figure 1 shows a remote unit, a signal line and a control unit controlling the remote unit over the signal line,
Figure 2 shows a timing diagram and
Figure 3 shows a remote unit, a signal line and a controlling unit.

### DETAILED DESCRIPTION OF THE INVENTION

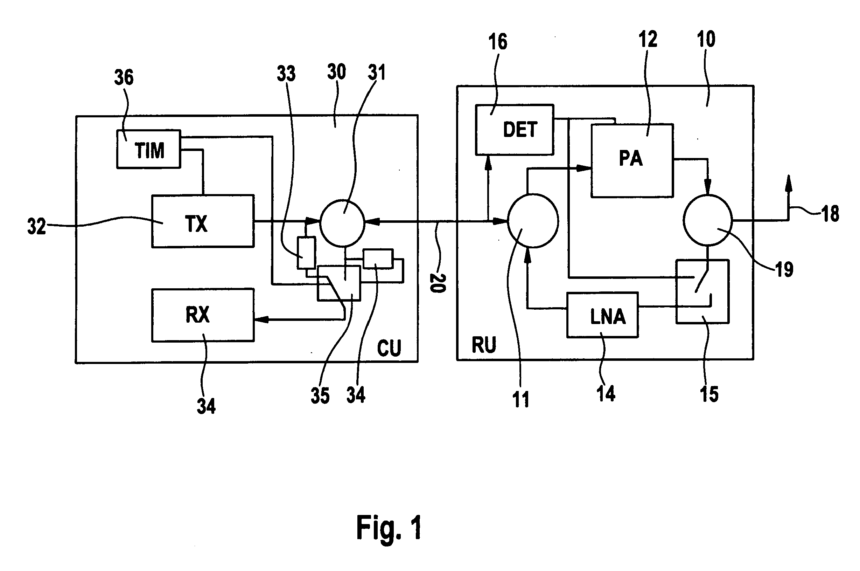

Figure 1 shows a remote unit 10, a signal line 20 and a controlling unit 30. The controlling unit 30 controls the remote unit 10 over the signal line 20.

The controlling unit 30 is for example a base station of a cellular communication network. The controlling unit 30 comprises a timing module (TIM) 36, a transmitter 32, a receiver 34 and a switch 35. The controlling unit also comprises a coupler 31, e. g. a circulator. If the switch 35 is in the left position the receiver 34 is connected to the transmitter 32 over the attenuator 33. If the switch 35 is in the middle position the controlling unit 30 is in receive mode. In this switch position the receiver 34 is connected to the signal line 20 over the coupler 31. If the switch 35 is in the right hand position the reflected power during transmission is received at the receiver 34. In the right hand position of the switch 35 the receiver 34 is connected to the signal line 20 over the coupler 31 and the attenuator 34.

Also shown in figure 1 is a remote unit 10. The remote unit 10 comprises a power detector (DET) 16, a power amplifier 12, e. g. a tower mounted amplifier (TMA) and a low noise amplifier 14, e. g. tower-top low noise amplifier (TT-LNA). The signal line 20 is connected to the coupler 11, e. g. a directional coupler. The power amplifier 12 and the low noise amplifier 14 are also connected to the coupler 11. The antenna module 18 is connected to the coupler 19, e. g. a circulator, which is connected the power amplifier 12 and to the switch 15. The low noise amplifier 14 is connected to the switch 15. The switch 15 has an ON position, the position on the right hand side, and an OFF position, the position on the left hand side. The switch 15 is controlled by the power detector 16. If the switch 15 is in OFF position, the position on the left hand side, shown in figure 1, then the low noise amplifier is disconnected from the antenna module 18. If the switch 15 is in ON position, the right hand position of the switch 15 in figure 1, then the low noise amplifier 14 is connected to the antenna module 18. One main idea of the invention is to use an activation signal before the transmission of the useful information starts. The transmission of the useful information is performed by the transmitter 32 which sends the useful information over the signal line 20 to the remote unit 10. In the remote unit 10 the signal is amplified by the power amplifier 12 and transmitted over the antenna module 18.

In reception mode the signal is received over the antenna module 18, amplified by the low noise amplifier 14 and sent over the signal line 20 to the receiver 34 of the controlling unit 30. In receive mode switch 35 of the controlling unit 30 is in the middle position and switch 15 of the remote unit 10 is in the right hand position.

An activation signal has a defined power level. The power level for the activation signal is defined with respect to the main transmit power, which is the power used for the transmission of the useful information. The activation signal is sent for a certain time in advance of the useful information. The certain time in advance of the transmission of the useful information is long enough to have the power amplifier 12 started up and stabilized for the transmission of the useful information. Preferably, the activation signal is made in a way not to disturb the communication of the useful information. The communication of the useful information is for example the exchange of useful information in between a base station and a mobile equipment. This means that the activation signal is preferably not seen by the mobile equipment. Possible signals for an activation signal are e. g. noise signals, e. g. pseudo random noise signals or a sine wave signal at centre frequencies of the bandwidth of respective radio channels. A small bandwidth around the centre frequency of the radio channel is not used for the transmission of the useful information in some radio systems. For those systems for example, the sine wave at the centre frequency of the bandwidth of the radio channel can be chosen to falls within said "unused" bandwidth and to act as the activation signal.

The power level of the signal received at the remote unit over the signal line 20 is detected by the power detector 16. It measures the power level and if the switch-over threshold for the activation signal is reached it switches the remote unit 10 to transmit mode. In transmit mode the power amplifier 12 is activated and the low noise amplifier 14 is disconnected from the antenna module 18. This means that in transmit mode the position of the switch 15 is on the left hand side in OFF position. The switch-over threshold for wake-up is chosen either to be an absolute value which is for example based on the relative level of the activation signal in relation to the absolute transmit power, possible cable losses and/or hardware tolerances. It is also possible to choose the switch-over threshold in relation to the actual transmit power if the remote unit monitors the actual transmit power and remembers this power. The switch-over threshold can be a fixed value, i. e. not configurable, to avoid possible mistakes or inconsistencies. The switch-over threshold can also be configurable to allow more adaptability.

In the configuration shown in figure 1 a voltage standing wave ratio measurement can be performed for the connection up to the remote unit 10. The measurement may for example work as follows. During a first phase during transmission the transmitted reference power is measured. For this measurement the switch 35 is in the left hand position, connecting the receiver 34 to the transmitter 32 over attenuator 33. The switch 15 of the remote unit 10 is in the left hand position. With the switch 15 in the left hand, OFF position, the low noise amplifier 14 is disconnected from the antenna module 18. During a second phase of VSWR measurement, during transmission, the reflected power is measured. For this measurement of the reflected power the switch 35 is in the right hand position. The switch 15 is still in the left hand position, as this second phase of VSWR measurement takes place during transmission. The described measurement of VSWR measures the VSWR up to the remote unit 10 the reflected power after the remote unit 10 is not measured because the switch 15 is in off-position, left hand position.

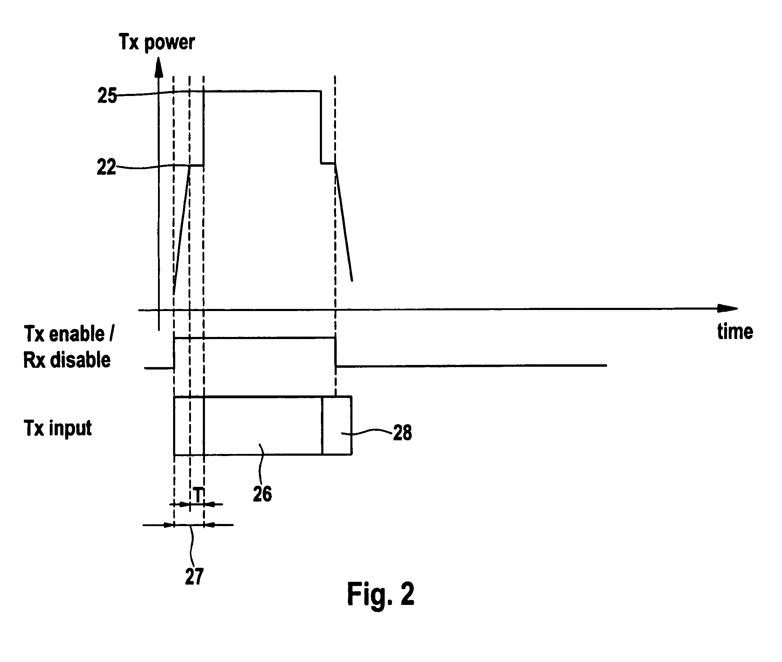

Figure 2 shows a timing diagram of the signal over the signal line 20. Shown is the transmit power over time on the signal line 20. The transmit power level 25 corresponds to the transmit power of the useful information. The switch-over threshold 22 is the transmit power level, which corresponds to the activation signal. The useful information 26 is transmitted after the activation signal 27. After the useful information 26 a trailing signal 28 is transmitted. During the activation signal the transmit power reaches the switch-over threshold 22 a certain time T in advance of the useful information 26.

The trailing signal can have the same shape as the activation signal. The trailing signal can also be a silence signal or any other suitable signal. The trailing signal can have the same power as the activation signal, although it does not have to have the same power. It can also be chosen below the switch-over threshold 22. The power detector 16 of the remote unit 10 must be fast enough to allow a short time T. On the other hand it has to be designed slow enough to avoid the switching to receive mode during a transmit burst of useful information 26. The useful information 26 is for example a WiMAX transmit signal.

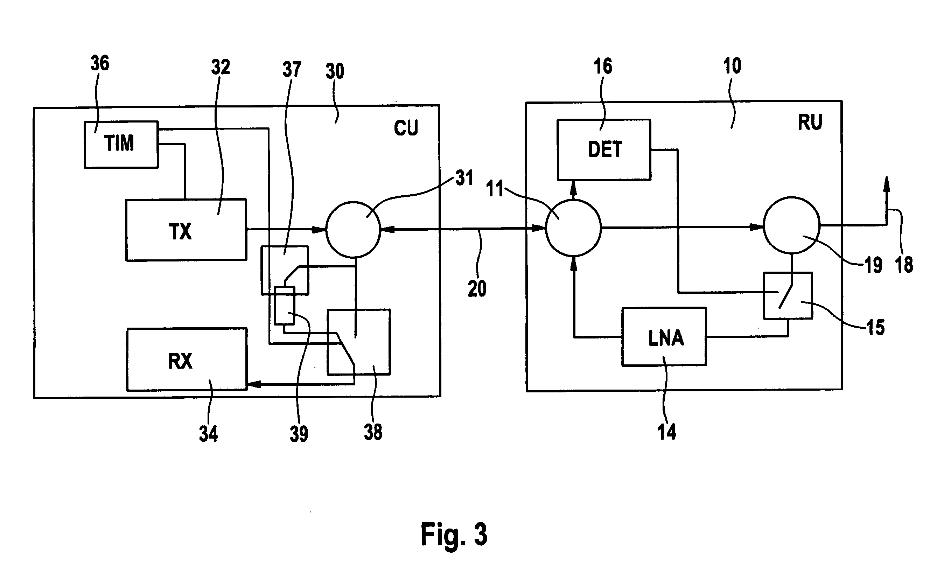

Figure 3 shows another embodiment of the invention. The remote unit 10 as shown in figure 3 comprises a low noise amplifier 14, e. g. a tower-top low noise amplifier (TT-LNA) and a switch 15. In receive mode, the switch 15 is in the right hand, ON position.

The controlling unit 30 as shown in figure 3 comprises a switch 37 and a switch 38. The controlling unit 30 of figure 3 also comprises a attenuator 39. The technical effect that can be achieved by the switches 37, and 38 and the attenuator 39 is the same as can be achieved by the switch 35 and the attenuator 33 and attenuator 34 of figure 1. The controlling unit 30 as shown is figure 1 provides the possibility of two different attenuator values 33 and 34 where the controlling unit 30 of figure 3 only provides one attenuator value 39. The controlling unit 30 of figure 1 is also able to control the remote unit 10 of figure 3 and the controlling unit 30 of figure 3 is also able to control the remote unit 10 of figure 1.

In the configuration shown in figure 3 a voltage standing wave ratio measurement can be performed for the connection up to the remote unit 10. The measurement may for example work as follows. During a first phase during transmission the transmitted reference power is measured. For this measurement the switch 38 is in the left hand position and the switch 37 is in the left-hand position, connecting the receiver 34 to the transmitter over attenuator 39. The switch 15 of the remote unit 10 is in the left hand position. With the switch 15 in the left hand, OFF position, the low noise amplifier 14 is disconnected from the antenna module 18. During a second phase of VSWR measurement, during transmission, the reflected power is measured. For this measurement of the reflected power the switch 38 is in the left hand position and the switch 37 is in the right-hand position. The switch 15 is still in the left hand position, as this second phase of VSWR measurement takes place during transmission. The described measurement of VSWR measures the VSWR up to the remote unit 10 the reflected power after the remote unit 10 is not measured because the switch 15 is in off-position, left hand position.

An inventive method of VSWR measurement behind the low noise amplifier 14 will be described with reference to figure 3.

In the embodiment of figure 3, the power detector 16 is able to detect an activation signal, which is input to the remote unit 10 over the signal line 20. Upon detection of the activation signal the power detector 16 opens the switch 15 to disconnect the low noise amplifier 14 from the antenna module 18. The power detector 16 also detects the absence of the activation signal after the transmission of the useful information 26 and closes the switch 15 to connect the low noise amplifier 14 to the antenna module 18. The remote unit 10 is then in receive mode. In receive mode the switch 38 of the controlling unit 30 is in the right hand position. If the switch 38 is in the left hand position the controlling unit 30 is in transmit mode. Switch 37 is used for the inventive VSWR measurement.

This embodiment of the invention provides a method to measure the voltage standing wave ratio behind the low noise amplifier 14 in receive mode. In receive mode the switch 15 is in the right hand position, it is closed. The low noise amplifier 14 is therefore connected to the antenna module 18. To measure the voltage standing wave ratio in the receive mode the controlling unit 30, e. g. the base station, sends a signal with a power which is below the switch-over threshold 22 of the remote unit 10. The power of the signal is also low enough to avoid damages to the low noise amplifier 14. The reflected signal which is received over the antenna module 18 is amplified by the low noise amplifier 14, output to the controlling unit 30 over the signal line 20, so that it can be measured by the controlling unit 30, which is for example a base station. If the cable attenuation between the controlling unit 30 and the remote unit 10 is known, and if the gain of the low noise amplifier 14 is known, the VSWR can be calculated precisely. If only the gain of the low noise amplifier 14 is known, some rough estimations of the cable loss can be made and the measured VSWR value is still precise enough to allow alarms. To monitor degradations of the connections behind the remote unit 10, the values of the VSWR which are known to be good at installation time can be recorded and then a deterioration exceeding a defined threshold can be used to warn the operator of the network. The measurement of the VSWR during transmit time is done as described with respect to figure 1. During a first phase during transmission the transmitted reference power is measured. The switch 37 is in the left hand position, connecting the receiver 34 to the transmitter 32 over the attenuator 39. In transmit mode the switch 38 is in the left hand position. During a second phase during transmission the reflected power of the connection between the remote unit 10 and the controlling unit 30 is measured. For this the switch 38 is in the left hand position and the switch 37 is in the right hand position connecting the receiver 34 to the coupler 31 over the attenuator 39.

The inventive measurement of VSWR in reception mode is performed as follows. The measurement of the VSWR in receive mode can be done separately from the measurement of the VSWR in transmit mode or can be done following the first and second phase. During a first phase of the measurement of the VSWR in receive mode or during a third phase of the overall VSWR measurement during reception time the transmitter of the controlling unit 30 is enabled and a low power signal is sent. The remote unit 10 remains in receive mode with the switch 15 in the right hand position. The transmitted reference signal is measured with the switch 37 in the left hand position and the switch 38 in the right hand position. During the second phase of the VSWR measurement in receive mode or fourth phase of the overall VSWR measurement, during the reception time with switch 15 in right hand position and switch 38 in right hand position the reflected and by the low noise amplifier 14 amplified signal is measured. For this measurement the switch 37 is in the right hand position. The measurement of the VSWR can be done when needed. It is not necessary to measure the VSWR during each frame transmission time. The phases 1 to 4 do not have to follow immediately one after another. The phases can be measured as convenient. The controlling unit 30 can measure the reflections on the signal line 20 and the reflections behind the remote unit 10 and compare them in order to determine if the reflections on the connection behind the remote unit 10 are dominant compared to the reflections on the connection 20 between the controlling unit 30 and the remote unit 10.

Preferably, the power amplifier 12, which is present in the remote unit 10 of figure 1, provides a transmit bypass in receive mode. This means that the transmit path is connected from input to output in receive mode. This leads to a behaviour of the remote unit 10 as a low noise amplifier 14 without a power amplifier 12, as shown in figure 3. For performing a VSWR measurement as described above this is an optimal configuration. By introducing this bypass, the remote unit 10 of figure one can also be used for VSWR measurement behind the remote unit 10.

## Claims

1. Method for controlling a remote unit (10) over a signal line (20), the remote unit (10) being switchable between a transmit mode and a receive mode, the remote unit (10) in transmit mode being used for transmission of useful information (26) which is input to the remote unit (10) over the signal line (20) and the remote unit (10) in receive mode being used for reception of useful information (26) which is output by the remote unit (10) over the signal line (20), the method comprising the steps of:
a) providing an activation signal (27) over the signal line (20) before the transmission of the useful information (26) over the signal line (20), and
b) detecting said activation signal (27) at the remote unit (10),
**characterized by** the step of providing said activation signal (27) with a defined power level with respect to a transmit power (25) used for the transmission of the useful information (26) and said method further comprising the step of switching the remote unit (10) to transmit mode upon detection of said defined power level having reached a switch-over threshold (26).

2. The method of claim 1, wherein the activation signal (27) is provided a certain time (T) before the transmission of the useful information (26), said time being equal or greater to the time needed to switch the remote unit (10) to transmit mode.

3. The method of claim 1 or 2, wherein the remote unit (10) comprises a low noise amplifier (14) connectable to the antenna module (18) and whereas switching the remote unit (10) to transmit mode comprises disconnecting the low noise amplifier (14) from the antenna module (18).

4. The method of claim 3 wherein the remote unit (10) comprises a power amplifier (16) connected to an antenna module (18) and wherein switching the remote unit (10) to transmit mode comprises activating the power amplifier (12).

5. The method of one of the claims 1 to 4, further comprising the step of detecting the absence of said activation signal (27) at the remote unit (10) after the transmission of the useful information (26) and switching the remote unit (10) to receive mode.

6. The method of claim 5 wherein the remote unit (10) uses a power detector (16) to detect the presence and the absence of the activation signal (27).

7. The method of claim 5, further comprising the following steps for VSWR measurement on the signal line (20):
c) providing a low power signal to the remote unit (10) over the signal line (20) while the remote unit (10) is in receive mode,
d) measuring the reflected low power signal on the signal line (20) while the remote unit (10) is in receive mode.

8. The method of one of the claims 5 to 7, wherein the remote unit (10) comprises a low noise amplifier (14) connectable to the antenna module (18) and wherein switching the remote unit (10) to receive mode comprises connecting the low noise amplifier (14) to the antenna module (18).

9. The method of claim 8, wherein the remote unit (10) comprises a power amplifier (12) connected to an antenna module (18) and wherein switching the remote unit (10) to receive mode comprises deactivating the power amplifier (12).

10. Remote unit (10) for being controlled by a controlling unit (30) comprising a port over which the remote unit (10) is connectable to a signal line (20), the remote unit (10) being switchable between a transmit mode and a receive mode, the remote unit (10) in transmit mode being adapted to transmit useful information (26) which is input to the remote unit (10) over the signal line (20) and the remote unit (10) in receive mode being adapted to receive useful information (26) which is output by the remote unit (10) over the signal line (20) wherein
the remote unit (10) comprises means (16) to detect the presence of an activation signal (27) on the signal line (20) before the transmission of the useful information (26) over the signal line (20),
**characterized in that** said means to detect the presence of said activation signal (27) having a defined power level with respect to a transmit power (25) used for the transmission of the useful information (26) and said remote unit (10) further comprises means to switch the remote unit (10) to transmit mode upon detection of said defined power level having reached a switch-over threshold (26).

11. Remote unit (10) according to claim 10, further comprising means (16) for detecting the absence of said activation signal (27) at the remote unit (10) after the transmission of the useful information (26) and
means for switching the remote unit (10) to receive mode upon detection of the absence of said activation signal (27) at the remote unit (10) after the transmission of the useful information (26).

12. A system comprising:
- a remote unit (10) according to claim 10;
- a signal line (20); and
- a controlling unit (30) for controlling the remote unit (10) over the signal line (20), and wherein the controlling unit (30) is adapted to provide an activation signal (27) over the signal line (20) before the transmission of the useful information (26) over the signal line (20) with a defined power level with respect to a transmit power (25) used for the transmission of the useful information (26).

## Patentansprüche

1. Verfahren zur Steuerung einer Remote-Elnheit (10) über eine Signalleitung (20), wobei die Remote-Einheit (10) zwischen einem Sendemodus und einem Empfangsmodus geschaltet werden kann, wobei die Remote-Einheit (10) im Sendemodus für die Übertragung von Nutzinformationen (26), welche über die Signalleitung (20) in die Remote-Einheit (10) eingespeist werden, verwendet wird, und die Remote-Einhelt (10) im Empfangsmodus für den Empfang von Nutzinformationen (26), welche von der Remote-Einheit (10) über die Signalleitung (20) ausgegeben werden, verwendet wird, wobei das Verfahren die folgenden Schritte umfasst:
a) Bereitstellen eines Aktivierungssignals (27) über die Signalleitung (20), bevor die Nutzinformationen (26) über die Signalleitung (20) übertragen werden, und
b) Erkennen des besagten Aktivierungssignals (27) an der Remote-Einheit (10),
**gekennzeichnet durch** den Schritt des Bereltstellens des besagten Aktivierungssignals (27) mit einem definierten Leistungspegel in Bezug auf eine für die Übertragung der Nutzinformationen (26) verwendete Sendeleistung (25), und wobei das besagte Verfahren weiterhin den Schritt des Schaltens der Remote-Einheit (10) in den Sendemodus umfasst, wenn erkannt wird, dass der besagte definierte Leistungspegel eine Umschaltschwelle (26) erreicht hat.

2. Verfahren nach Anspruch 1, wobei das Aktivierungssignal (27) In einem gewissen Zeitraum (T) vor der Übertragung der Nutzinformationen (26) bereitgestellt wird, wobei der gewisse Zeitraum gleich der oder größer als die für das Schalten der Remote-Einheit (10) in den Sendemodus erforderliche(n) Zeit ist.

3. Verfahren nach Anspruch 1 oder 2, wobei die Remote-Einheit (10) einen rauscharmen Verstärker (14) umfasst, welcher an das Antennenmodul (18) angeschlossen werden kann, und wobei das Schalten der Remote-Einheit (10) In den Sendemodus das Trennen des rauscharmen Verstärkers (14) von dem Antennenmodul (18) umfasst.

4. Verfahren nach Anspruch 3, wobei die Remote-Elnheit (10) einen Leistungsverstärker (16) umfasst, welcher an ein Antennenmodul (18) angeschlossen ist, und wobei das Schalten der Remote-Einhelt (10) in den Sendemodus das Aktivieren des Leistungsverstärkers (12) umfasst.

5. Verfahren nach einem der Ansprüche 1 bis 4, weiterhin umfassend den Schritt des Erkennens der Abwesenheit des besagten Aktivierungssignals (27) an der Remote-Einheit (10) nach der Übertragung der Nutzinformationen (26), und das Schalten der Remote-Einhelt (10) in den Empfangsmodus.

6. Verfahren nach Anspruch 5, wobei die Remote-Einheit (10) einen Leistungsdetektor (16) einsetzt, um das Vorhandensein und die Abwesenheit des Aktivierungssignals (27) zu erkennen.

7. Verfahren nach Anspruch 5, weiterhin umfassend die folgenden Schritte zur VSWR-Messung auf der Signalleitung (20):
c) Bereitstellen eines leistungsschwachen Signals an die Remote-Einheit (10) über die Signalteitung (20), während sich die Remote-Elnheit (10) im Empfangsmodus befindet,
d) Messen des reflektierten leistungsschwachen Signals auf der Signalteitung (20), während sich die Remote-Einheit (10) im Empfangsmodus befindet.

8. Verfahren nach einem der Ansprüche 5 bis 7, wobei die Remote-Einheit (10) einen rauscharmen Verstärker (14), der an das Antennenmodul (18) angeschlossen werden kann, umfasst, und wobei das Schalten der Remote-Einheit (10) In den Empfangsmodus das Anschließen des rauscharmen Verstärkers (14) an das Antennenmodul (18) umfasst.

9. Verfahren nach Anspruch 8, wobei die Remote-Einheit (10) einen Leistungsverstärker (12) umfasst, welcher an ein Antennenmodul (18) angeschlossen ist, und wobei das Schalten der Remote-Einheit (10) in den Empfangsmodus das Daaktivieren des Leistungsverstärkers (12) umfasst.

10. Remote-Einheit (10), die von einer Steuereinheit (30) gesteuert wird, umfassend einen Port, über welchen die Remote-Einheit (10) an eine Signalleitung (20) angeschlossen werden kann, wobei die Remote-Einhelt (10) zwischen einem Sendemodus und einem Empfangsmodus schaltbar ist, wobei die Remote-Einheit (10) im Sendemodus dazu ausgelegt ist, Nutzinformationen (26), welche über die Signalleitung (20) in die Remote-Einheit (10) eingespeist werden, zu übertragen, und wobei die Remote-Einheit (10) im Empfangsmodus dazu ausgelegt Ist, Nutzinformationen (26), welche von der Remote-Einheit (10) über die Signalleitung (20) ausgegeben werden, zu empfangen,
wobei
die Remote-Einheit (10) Mittel (16) umfasst, um das Vorhandensein eines Aktivierungssignals (27) auf der Signalleitung (20) zu erkennen, bevor die Nutzinformationen (26) über die Signalleitung (20) übertragen werden,
**dadurch gekennzeichnet, dass** die besagten Mittel zum Erkennen des Vorhandenseins des besagten Aktivierungssignals (27) mit einem definierten Leistungspegel in Bezug auf eine für die Übertragung der Nutzinformationen (26) verwendete Sendeleistung (25), und wobei die besagte Remote-Einheit (10) weiterhin Mittel zum Schalten der Remote-Einheit (10) in den Sendemodus bei Erkennen, dass der besagte definierte Leistungspegel eine Umschaltschwelle (26) erreicht hat, umfasst.

11. Remote-Einheit (10) nach Anspruch 10, weiterhin umfassend Mittel (16) zum Erkennen des Nichtvorhandenselns des besagten Aktivierungssignals (27) an der Remote-Einheit (10) nach der Übertragung der Nutzinformationen (26), und
Mittel zum Schalten der Remote-Einheit (10) In den Empfangsmodus bei Erkennen des Nichtvorhandenseins des besagten Aktivierungssignals (27) an der Remote-Einheit (10) nach der Übertragung der Nutzinformationen (26).

12. System, umfassend:
- Eine Remote-Einheit (10) gemäß Anspruch 10;
- eine Signalleitung (20); und
- eine Steuereinheit (30) zum Steuern der Remote-Einheit (10) über die Signalleitung (20), und wobei die Steuereinheit (30) dazu ausgelegt ist, ein Aktivierungssignal (27) über die Signalleitung (20) bereitzustellen, bevor die Nutzinformationen (26) über die Signalleitung (20) mit einem definierten Leistungspegel in Bezug auf eine für die Übertragung der Nutzinformationen (26) verwendeten Sendeleistung (25) übertragen werden.

## Revendications

1. Procédé de commande d'une unité distante (10) sur une ligne de signal (20), l'unité distante (10) pouvant commuter entre un mode d'émission et un mode de réception, l'unité distante (10) en mode d'émission étant utilisée pour l'émission d'informations utiles (26) qui sont délivrées en entrée à l'unité distante (10) sur la ligne de slgnal (20), l'unité distante (10) en mode de réception étant utilisée pour la réception d'informations utiles (26) qui sont délivrées en sortie par l'unité distante (10) sur la ligne de signal (20), le procédé comprenant les étapes suivantes :
a) fournir un signal d'activation (27) sur la ligne de signal (20) avant l'émission des informations utiles (26) sur la ligne de signal (20), et
b) détecter ledit signal d'activation (27) au niveau de l'unité distante (10),
**caractérisé par** l'étape de fourniture dudit signal d'activation (27) avec un niveau de puissance défini par rapport à une puissance d'émission (25) utilisée pour l'émission des informations utiles (26), ledit procédé comprenant en outre l'étape de commutation de l'unité distante (10) en mode d'émission lors de la détection que ledit niveau de puissance défini a atteint un seuil de commutation (26).

2. Procédé selon la revendication 1, dans lequel un certain temps (T) est accordé au signal d'activation (27) avant l'émission des informations utiles (26), ledit temps étant supérieur ou égal au temps nécessaire à la commutation de l'unité distante (10) en mode d'émission.

3. Procédé selon la revendication 1 ou 2, dans lequel l'unité distante (10) comprend un amplificateur à bruit faible (14) pouvant être connecté au module d'antenne (18), alors que la commutation de l'unité distante (10) en mode d'émission comprend la déconnexion de l'amplificateur à bruit faible (14) du module d'antenne (18).

4. Procédé selon la revendication 3 dans lequel l'unité distante (10) comprend un amplificateur de puissance (16) connecté à un module d'antenne (18) et dans lequel la commutation de l'unité distante (10) en mode d'émission comprend l'activation de l'amplificateur de puissance (12).

5. Procédé selon l'une des revendications 1 à 4, comprenant en outre l'étape de détection de l'absence dudit signal d'activation (27) au niveau de l'unité distante (10) après l'émission des informations utiles (26) et de commutation de l'unité distante (10) en mode de réception.

6. Procédé selon la revendication 5 dans lequel l'unité distante (10) utilise un détecteur de puissance (16) pour détecter la présence et l'absence du signal d'activation (27).

7. Procédé selon la revendication 5, comprenant en outre les étapes suivantes pour la mesure du rapport d'ondes stationnaires (ROS) sur la ligne de signal (20) :
c) fournir un signal de faible puissance à l'unité distante (10) sur la ligne de signal (20) lorsque l'unité distante (10) est en mode de réception,
d) mesurer le signal de faible puissance réfléchi sur la ligne de signal (20) lorsque l'unité distante (10) est en mode de réception.

8. Procédé selon l'une des revendications 5 à 7, dans lequel l'unité distante (10) comprend un amplificateur à bruit faible (14) pouvant être connecté au module d'antenne (18) et dans lequel la commutation de l'unité distante (10) en mode de réception comprend la connexion de l'amplificateur à bruit faible (14) au module d'antenne (18).

9. Procédé selon la revendication 8, dans lequel l'unité distante (10) comprend un amplificateur de puissance (12) connecté à un module d'antenne (18) et dans lequel la commutation de l'unité distante (10) en mode de réception comprend la désactivation de l'amplificateur de puissance (12).

10. Unité distante (10) destinée à être commandée par une unité de commande (30) comprenant un port sur lequel l'unité distante (10) peut être connectée à une ligne de signal (20), l'unité distante (10) pouvant commuter entre un mode d'émission et un mode de réception, l'unité distante (10) en mode d'émission étant adaptée pour émettre des informations utiles (26) qui sont délivrées en entrée à l'unité distante (10) sur la ligne de signal (20), l'unité distante (10) en mode de réception étant adaptée pour recevoir des informations utiles (26) qui sont délivrées en sortie par l'unité distante (10) sur la ligne de signal (20) dans laquelle
l'unité distante (10) comprend des moyens (16) pour détecter la présence d'un signal d'activation (27) sur la ligne de signal (20) avant l'émission des informations utiles (26) sur la ligne de signal (20),
**caractérisée en ce que** lesdits moyens pour détecter la présence dudit signal d'activation (27) présentent un niveau de puissance défini par rapport à une puissance d'émission (25) utilisée pour l'émission des informations utiles (26) et ladite unité distante (10) comprend en outre des moyens de commutation de l'unité distante (10) en mode d'émission lors de la détection que ledit niveau de puissance défini a atteint un seuil de commutation (26).

11. Unité distante (10) selon la revendication 10, comprenant en outre des moyens (16) pour détecter l'absence dudit signal d'activation (27) au niveau de l'unité distante (10) après l'émission des informations utiles (26) et
des moyens de commutation de l'unité distante (10) en mode de réception lors de la détection de l'absence dudit signal d'activation (27) au niveau de l'unité distante (10) après l'émission des informations utiles (26).

12. Système comprenant :
- une unité distante (10) selon la revendication 10 ;
- une ligne de signal (20) ; et
- une unité de commande (30) pour commander l'unité distante (10) sur la ligne de signal (20), et dans lequel l'unité de commande (30) est adaptée pour fournir un signal d'activation (27) sur la ligne de signal (20) avant l'émission des informations utiles (26) sur la ligne de signal (20) avec un niveau de puissance défini par rapport à une puissance d'émission (25) utilisée pour l'émission des informations utiles (26).
